(19) Europäisches Patentamt / European Patent Office / Office européen des brevets

(11) **EP 3 656 030 B1**

(12) **FASCICULE DE BREVET EUROPEEN**

(45) Date de publication et mention de la délivrance du brevet:
**07.04.2021 Bulletin 2021/14**

(21) Numéro de dépôt: **18758919.7**

(22) Date de dépôt: **13.07.2018**

(51) Int Cl.:
*H02J 1/10* $^{(2006.01)}$     *H02J 1/14* $^{(2006.01)}$
*H02J 3/36* $^{(2006.01)}$     *H02J 4/00* $^{(2006.01)}$

(86) Numéro de dépôt international:
**PCT/FR2018/051776**

(87) Numéro de publication internationale:
**WO 2019/016449 (24.01.2019 Gazette 2019/04)**

(54) **DISPOSITIF DE CONTRÔLE DE FLUX DE PUISSANCE POUR CONTRÔLER LA RÉPARTITION DES COURANTS DANS UN RÉSEAU MAILLÉ**

LEISTUNGSFLUSSSTEUERUNGSVORRICHTUNG ZUR STEUERUNG DER VERTEILUNG VON STRÖMEN IN EINEM MESH-NETZWERK

POWER FLOW CONTROL DEVICE FOR CONTROLLING THE DISTRIBUTION OF CURRENTS IN A MESH NETWORK

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.07.2017 FR 1756880**

(43) Date de publication de la demande:
**27.05.2020 Bulletin 2020/22**

(73) Titulaires:
• **Supergrid Institute**
  **69100 Villeurbanne (FR)**
• **Ecole Centrale de Lyon**
  **69134 Ecully (FR)**

(72) Inventeurs:
• **TOURE, Séllé**
  **69007 Lyon (FR)**
• **MOREL, Florent**
  **69007 Lyon (FR)**
• **POULLAIN, Serge**
  **69007 Lyon (FR)**

(74) Mandataire: **Opilex**
  **32, rue Victor Lagrange**
  **69007 Lyon (FR)**

(56) Documents cités:
EP-A1- 2 670 013     EP-A1- 3 007 300
EP-A1- 3 007 301     WO-A1-2010/115453

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

## Domaine technique de l'invention

La présente invention se rapporte à un dispositif de contrôle de flux de puissance destiné à être employé dans un réseau maillé. Le dispositif de l'invention pourra notamment être employé dans un réseau maillé haute tension à courant continu.

## Etat de la technique

Un réseau est un ensemble de lignes aériennes ou de câbles appelés par la suite « liaisons » qui connectent entre elles des dispositifs (ou terminaux) afin qu'ils échangent de l'énergie. Dans un réseau à courant continu, les dispositifs qui fournissent ou consomment de l'énergie sont généralement des convertisseurs électroniques de puissance nommés "stations de conversion".

Si le réseau est maillé, le courant dispose de plusieurs chemins possibles pour aller d'une station de conversion à une autre. Les courants dans les liaisons se répartissent en fonction des caractéristiques des liaisons (en continu, cette caractéristique est la résistance de la liaison).

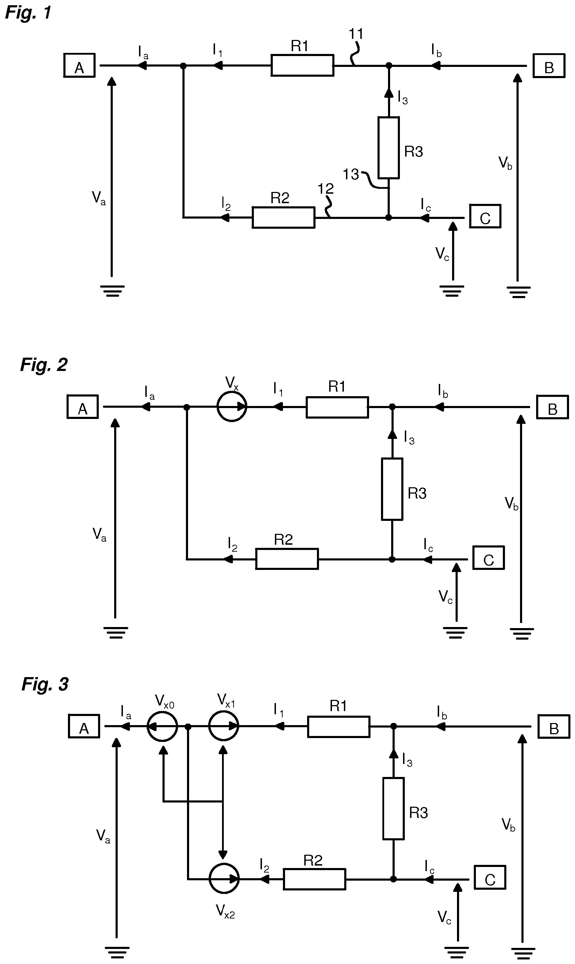

La figure 1 représente un réseau maillé doté d'une seule maille. Ce réseau comporte ainsi trois nœuds qui sont chacun à une tension déterminée et trois liaisons, dites première liaison reliant le premier nœud au deuxième nœud, deuxième liaison reliant le premier nœud au troisième nœud et troisième liaison reliant le deuxième nœud au troisième nœud.

Par exemple, sur le réseau représenté sur la figure 1, les trois tensions $V_a$, $V_b$, $V_c$ représentent les tensions imposées par des stations de conversions. Les trois résistances R1, R2, R3 représentent les résistances des liaisons.

Chaque station de conversion est apte à injecter ou extraire une puissance du réseau. Dans cette configuration, les courants ($I_1$, $I_2$, $I_3$) dans chaque liaison ne sont pas contrôlés par les stations de conversion. En effet, chaque station de conversion impose au réseau, au nœud où elle est connectée, une tension déterminée. Alors que le courant dans chaque station de conversion est inférieur à son courant maximal, il est possible d'atteindre des points de fonctionnement pour lesquels une liaison est traversée par un courant supérieur à son courant maximal alors que d'autres liaisons dans le réseau (qui pourraient être utilisées pour transférer l'énergie) sont en sous-charge.

Dans une architecture telle que représentée sur la figure 1, dans le cas où les stations de conversion B et C fournissent de l'énergie au réseau et la station de conversion A reçoit de l'énergie, le courant dispose de deux chemins possibles pour aller de la station B à la station A :

- Il peut passer directement par la première liaison 11 ou,
- Il peut passer par les deux liaisons 13 et 12.

Son chemin sera notamment déterminé en fonction des valeurs des résistances des liaisons et des tensions imposées par les stations de conversion du réseau.

Des solutions ont déjà été proposées dans l'état de la technique pour assurer une meilleure répartition du courant dans les liaisons d'un réseau maillé.

Une solution décrite dans la demande de brevet WO2012/037957A1 consiste à insérer un convertisseur électronique de puissance afin de modifier la tension à une extrémité d'une liaison.

D'autres solutions consistent à insérer une source de tension en série avec une liaison, comme schématisé sur la figure 2. Le réglage de cette tension permet de modifier la répartition des courants dans le réseau. Pour cela, différentes architectures ont été décrites dans les demandes de brevet WO2010/115452A1, WO2013/013858A1.

Des convertisseurs qui ajoutent une source de tension en série avec deux liaisons en alternance ont également été décrits dans les demandes EP3007301A1 et EP3007300A1. Cependant, ce type de structure présente des limitations : les courants ($I_{IN1}$ et $I_{IN2}$ dans ces documents) doivent être de même signe ($I_C$ est égal à $I_{IN1}$ et à - $I_{IN2}$ en alternance), la structure n'est pas extensible au cas où plus de deux liaisons sont connectées à la troisième liaison ($I_{OUT}$) et génère plus d'harmoniques en fonctionnement.

Une autre solution décrite dans la demande de brevet WO2013/178807A1 et schématisée sur la figure 3 consiste à insérer deux sources de tension ($V_{x1}$, $V_{x2}$) en série chacune avec une liaison distincte et une source de tension ($V_{x0}$) en série avec une station de conversion. Sur cette figure, les double-flèches symbolisent la capacité d'échange d'énergie entre les sources.

Ce type de solution présente trois degrés de libertés alors que le système ne doit satisfaire que deux contraintes :

- $V_x = V_{x1} - V_{x2}$ qui permet de régler le courant dans les liaisons, et
- L'égalité des puissances $V_{x1}I_1 + V_{x2}I_2 - V_{x0}I_a = 0$ en régime permanent (en considérant un rendement de 1)).

Elle présente donc plus de degrés de liberté que nécessaire et s'avère donc plus complexe que nécessaire.

Un premier but de l'invention est de proposer une solution qui permette d'augmenter la capacité de transport d'un tel réseau maillé et d'éviter les congestions de liaisons (courant supérieur au courant nominal) sans avoir à investir dans de nouvelles liaisons.

Un deuxième but de l'invention est de proposer un dispositif de contrôle de flux de puissance permettant de remplir ce premier but et destiné à venir se connecter dans un réseau maillé à courant continu, ce dispositif étant :

- D'une architecture simple et peu couteuse,
- Facile à installer et à commander,
- Capable de s'adapter à différentes architectures et modes de fonctionnement de réseau maillé.

Le dispositif de l'invention sera également adapté pour fonctionner dans un réseau maillé à courant alternatif.

**Exposé de l'invention**

Ces deux buts sont atteints par un dispositif de contrôle de flux de puissance destiné à être employé dans un réseau maillé à courant continu, une maille comportant au moins trois nœuds, chacun à une tension déterminée et trois liaisons, dites première liaison reliant le premier nœud au deuxième nœud, deuxième liaison reliant le premier nœud au troisième nœud et troisième liaison reliant le deuxième nœud au troisième nœud, ledit dispositif étant caractérisé en ce qu'il comporte :

- Une première borne destinée à être connectée en série sur la première liaison, une deuxième borne destinée à être connectée en série sur la deuxième liaison et une troisième borne destinée à être connectée au premier nœud,
- Une première source de tension connectée entre sa première borne et sa troisième borne comprenant au moins un premier condensateur,
- Une deuxième source de tension connectée entre sa deuxième borne et sa troisième borne comprenant au moins un deuxième condensateur,
- Une source de courant connectée alternativement à la première source de tension et à la deuxième source de tension et configurée pour assurer un transfert d'énergie entre la première source de tension et la deuxième source de tension, ladite source de courant comportant au moins une inductance,
- Des moyens de commutation agencés pour permettre une connexion de ladite source de courant en alternance, en parallèle de la première source de tension ou en parallèle de la deuxième source de tension, lesdits moyens de commutation comprenant :

  ◦ Un premier ensemble de deux premiers commutateurs connecté entre la première borne et la troisième borne du dispositif, en parallèle de la première source de tension, les deux commutateurs du premier ensemble définissant entre eux un premier point milieu de connexion ;

  ◦ Un deuxième ensemble de deux deuxièmes commutateurs connecté entre la deuxième borne et la troisième borne, en parallèle de la deuxième source de tension, les deux commutateurs du deuxième ensemble définissant entre eux un deuxième point milieu de connexion ;

  ◦ Un troisième commutateur connecté entre la deuxième borne et le premier point milieu du premier ensemble de commutateurs ;

  ◦ Un quatrième commutateur connecté entre la première borne et le deuxième point milieu du deuxième ensemble de commutateurs.

- Des moyens de commande configurés pour commander lesdits moyens de commutation de manière à réaliser ladite connexion de ladite source de courant en alternance, en parallèle de la première source de tension ou en parallèle de la deuxième source de tension et commander un transfert d'énergie entre la première source de tension et la deuxième source de tension via ladite source de courant.

Selon une réalisation particulière, la première source de tension comporte au moins un condensateur.
Selon une réalisation particulière, la deuxième source de tension comporte au moins un condensateur.
Selon une réalisation particulière, la source de courant comporte au moins une inductance.
Selon une réalisation particulière, les moyens de commutation comportent six commutateurs :

- Un premier ensemble de deux premiers commutateurs, connecté entre la première borne et la troisième borne du dispositif, en parallèle de la première source de tension, les deux commutateurs du premier ensemble définissant entre eux un premier point milieu de connexion ;

- Un deuxième ensemble de deux deuxièmes commutateurs, connecté entre la deuxième borne et la troisième borne, en parallèle de la deuxième source de tension, les deux commutateurs du deuxième ensemble définissant entre eux un deuxième point milieu de connexion ;

- Un troisième commutateur connecté entre la deuxième borne et le premier point milieu du premier ensemble de commutateurs ;

- Un quatrième commutateur connecté entre la première borne et le deuxième point milieu du deuxième ensemble de commutateurs.

Selon une réalisation particulière, l'inductance est connectée entre le premier point milieu et le deuxième point milieu.
Selon une réalisation particulière, chaque commutateur est choisi en fonction du signe des paramètres suivants :

- Le courant $I_1$ ;

- Le courant $I_2$ ;

- Le ratio $I_1/I_2$ ;

- La différence $I_1$-$I_2$ ;

- La différence $Vx=V_1-V_2$ ;

- Le ratio $\frac{V_1-V_2}{I_1+I_2}$ ;

Dans lesquelles :

- $I_1$ correspond au courant qui circule dans la première liaison ;
- $I_2$ correspond au courant qui circule dans la deuxième liaison ;
- V1 correspond à la tension aux bornes de la première source de tension ;
- V2 correspond à la tension aux bornes de la deuxième source de tension ;

Selon une autre réalisation particulière, chaque commutateur est choisi parmi :

- Un circuit ouvert ;

- Un court-circuit ;

- Une diode ;

- Un interrupteur contrôlé non réversible ;

- Un interrupteur contrôlé réversible en courant ;

- Un interrupteur contrôlé réversible en tension ;

- Un interrupteur contrôlé réversible en courant et en tension ;

- Un commutateur mécanique seul ;

- Un commutateur mécanique en série avec une diode ;

- Un commutateur mécanique en série avec un interrupteur contrôlé ;

Selon une réalisation particulière, lesdits moyens de commutation et ladite source de courant sont répartis dans plusieurs blocs de conversion identiques, et en ce qu'il comporte un premier bloc de conversion connecté de manière distincte à la première borne, à la deuxième borne et à la troisième borne.

Selon une réalisation particulière, le dispositif comporte un système de contournement dudit dispositif, commandé par lesdits moyens de commande et comprenant des moyens de commutation agencés en parallèle de chaque source de tension.

Selon une réalisation particulière, ledit système de contournement comporte des moyens commandés de décharge de chaque source de tension.

L'invention concerne également l'utilisation du dispositif tel que défini ci-dessus dans un réseau maillé à courant continu, ledit réseau comprenant au moins trois nœuds qui sont chacun à une tension déterminée et trois liaisons, dites première liaison reliant le premier nœud au deuxième nœud, deuxième liaison reliant le premier nœud au troisième nœud et troisième liaison reliant le deuxième nœud au troisième nœud.

Par ailleurs, le dispositif pourra être adapté pour atteindre d'autres objectifs, notamment :

- Pour répartir les courants dans le réseau de manière à minimiser les pertes ;
- Pour contrôler la répartition du courant dans des liaisons, et ainsi par exemple annuler le courant dans une liaison en vue par exemple d'ouvrir un contacteur pour une opération de reconfiguration du réseau ;
- Pour équilibrer les courants dans les liaisons, notamment dans le cas d'un réseau mixte (bipolaire / monopolaire (« tap converters » insérés dans un réseau bipolaire par exemple)) ;

**Brève description des figures**

D'autres caractéristiques et avantages vont apparaître dans la description détaillée qui suit, faite en regard des dessins annexés dans lesquels :

- La figure 1 représente un réseau maillé minimal à une seule maille.
- Les figures 2 et 3 représentent de manière schématique des solutions connues dans l'état de la technique.
- La figure 4A représente de manière schématique le dispositif de contrôle de flux de puissance de l'invention incorporé dans un réseau maillé.
- La figure 4B représente de manière schématique un exemple de réalisation du dispositif de contrôle de flux de puissance de l'invention, incorporé dans le réseau maillé.
- La figure 5 représente l'architecture générale du dispositif de contrôle de flux de puissance de l'invention incorporé dans un réseau maillé.
- Les figures 6A à 6I représentent plusieurs modes de réalisation du dispositif de contrôle de flux de puissance de l'invention répondant à une première série de besoins.
- Les figures 7A à 7K représentent plusieurs modes de réalisation du dispositif de contrôle de flux de puissance de l'invention répondant à une deuxième série de besoins.

- La figure 8 représente une évolution du dispositif de l'invention dans un réseau maillé plus complexe.
- La figure 9 représente un système dit de "bypass" employé dans le dispositif de l'invention.

## Description détaillée d'au moins un mode de réalisation

Le dispositif de contrôle de flux de puissance de l'invention est destiné à être employé dans un réseau maillé, préférentiellement haute tension, à courant continu. Selon sa configuration, il pourra également être employé dans un réseau maillé à courant alternatif. On verra que cela sera le cas lorsque les moyens de commutation comportent des interrupteurs de puissance réversibles en courant et en tension.

Comme déjà évoqué ci-dessus en liaison avec la figure 1, un réseau maillé se présente, de la manière la plus simple, sous la forme de trois nœuds interconnectés.

Chaque nœud est avantageusement connecté directement ou indirectement à une ou plusieurs stations de conversion. La station de conversion A est ainsi connectée au premier nœud. La station de conversion B est ainsi connectée au deuxième nœud du réseau. La station de conversion C est ainsi connectée au troisième nœud du réseau.

Chaque station de conversion est destinée à injecter une puissance sur le réseau ou extraire une puissance du réseau.

Chaque station de conversion est destinée à injecter un courant sur le réseau ou extraire un courant du réseau maillé. Il s'agit du courant $I_a$ pour la station de conversion A, du courant $I_b$ pour la station de conversion B et du courant $I_c$ pour la station de conversion C.

Une tension est imposée sur chaque nœud par la station connectée sur le nœud. La tension $V_a$ est appliquée au premier nœud du réseau. La tension $V_b$ est appliquée au deuxième nœud du réseau. La tension $V_c$ est appliquée au troisième nœud du réseau.

Une première liaison 11 relie le premier nœud au deuxième nœud. Une deuxième liaison 12 relie le premier nœud au troisième nœud. Une troisième liaison 13 relie le deuxième nœud au troisième nœud.

Chaque liaison pourra être formée d'une ligne aérienne, d'un câble ou de toute autre solution permettant de transporter du courant.

Comme déjà décrit ci-dessus, dans une configuration où les stations B et C fournissent de l'énergie sur le réseau maillé et où la station A reçoit cette énergie, les courants Ib et Ic peuvent disposer de deux chemins pour rejoindre la station A. Sur la figure 1, on ainsi trois courants $I_1$, $I_2$ et $I_3$ circulant sur chaque liaison du réseau.

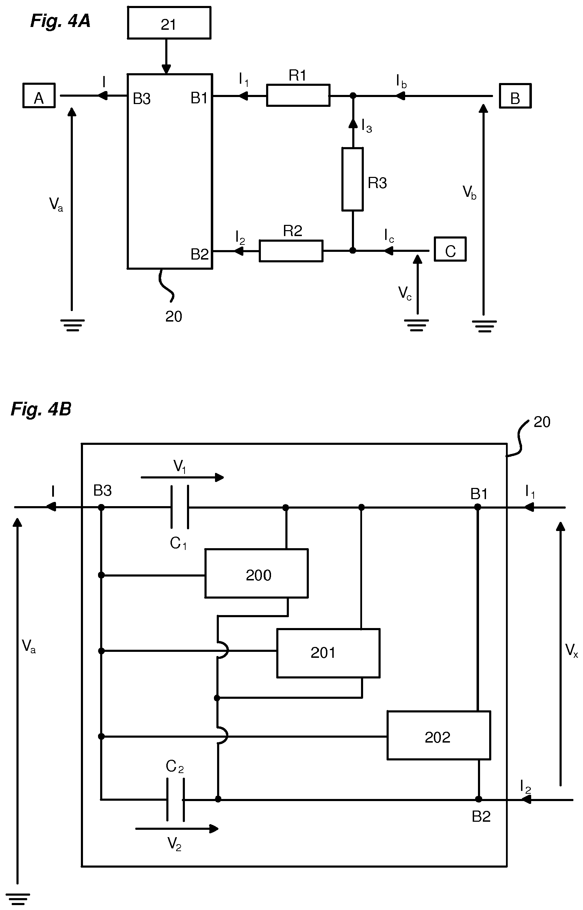

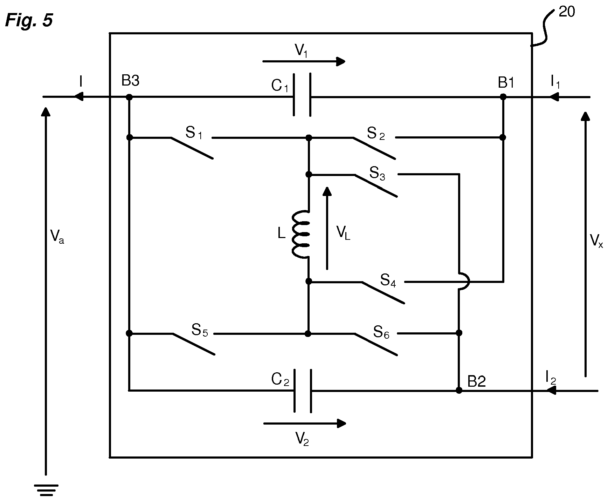

En référence aux figures 4A, 4B et 5, le dispositif 20 de l'invention comporte :

- Une première borne B1 destinée à être connectée à la première liaison, une deuxième borne B2 destinée à être connectée à la deuxième liaison et une troisième borne B3 destinée à être connectée au premier nœud ;
- Une première source de tension connectée entre sa première borne et sa troisième borne ;
- Une deuxième source de tension connectée entre sa deuxième borne et sa troisième borne ;
- Une source de courant (représentée comme une inductance) connectée à la première source de tension (représentée comme un condensateur) et à la deuxième source de tension (représentée comme un condensateur) et utilisée pour assurer un transfert d'énergie entre la première source de tension et la deuxième source de tension ;
- Des moyens de commutation agencés pour permettre une connexion de ladite source de courant dans une configuration déterminée. Selon une particularité de l'invention, il s'agira notamment de connecter la source de courant, en alternance, en parallèle de la première source de tension ou en parallèle de la deuxième source de tension ;
- Des moyens de commande 21 configurés pour commander lesdits moyens de commutation de manière à réaliser ladite connexion de ladite source de courant en alternance, en parallèle de la première source de tension ou en parallèle de la deuxième source de tension et commander un transfert d'énergie entre la première source de tension et la deuxième source de tension via ladite source de courant ;

Bien entendu, il faut considérer les trois bornes B1, B2, B3 comme équivalentes. La connexion des trois bornes B1, B2, B3 du dispositif, respectivement aux trois liaisons 11, 12, 13, est donc non limitative. Le dispositif peut être inséré dans le réseau de manière à connecter ses bornes de manière différente aux liaisons. Etant donné que le dispositif comporte trois bornes et que le réseau comporte trois liaisons, on aura ainsi six configurations de connexion permanente du dispositif dans le réseau.

Lesdits moyens de commande 21 ne sont pas détaillés dans la présente demande. Ils comportent avantageusement une unité de traitement destinée à générer des signaux de commande pour assurer la commande en alternance et éventuellement des unités de commande ("drivers") adaptés aux moyens de commutation employés. Ces moyens de commande font avantageusement partie du dispositif 20 de l'invention.

La première source de tension peut comporter au moins un premier condensateur $C_1$ ayant une capacité déterminée.

La deuxième source de tension peut comporter au moins un deuxième condensateur $C_2$ ayant une capacité déterminée.

La source de courant peut comporter une inductance L.

Les moyens de commutation comportent notamment un ou plusieurs interrupteurs électroniques de puissance.

Les deux condensateurs $C_1$, $C_2$ sont connectés tous deux à la troisième borne B3 du dispositif 20 et présentent leur autre borne connectée respectivement à la première borne B1 et à la deuxième borne B2 du dispositif de manière à venir se connecter aux deux liaisons 11, 12 dont on souhaite contrôler les courants ($I_1$, $I_2$).

En variante de réalisation, l'un des deux condensateurs ($C_1$, $C_2$) pourrait être connecté entre les bornes B1 et B2 alors que l'autre condensateur resterait connecté entre les bornes B1 et B3 ou B2 et B3.

La constitution des interrupteurs électroniques de puissance et leur arrangement dépend d'une part des signes des courants ($I_1$ et $I_2$) qui circulent dans les liaisons, d'autre part du signe de la tension ($V_x = V_1 - V_2$) qui doit être insérée dans la maille dans laquelle on cherche à contrôler les courants. La structure des moyens de commutation est donc choisie en fonction du réseau dans lequel le dispositif sera inséré et des points de fonctionnement attendus.

La figure 4B représente un mode de réalisation particulier du dispositif qui comporte plusieurs blocs de conversion identiques. Chaque bloc de conversion 200, 201, 202 comporte trois bornes, chacune étant connectée de manière distincte respectivement à la borne B1, à la borne B2 et à la borne B3.

Les trois blocs de conversion sont identiques et comportent chacun au moins une inductance et des moyens de commutation. L'architecture de chaque bloc de conversion et leur association dans le dispositif permet notamment de réaliser toutes les topologies qui seront décrites ci-dessous, pour répondre à tous les cas ou besoins de fonctionnement possibles.

Cette architecture modulaire à plusieurs blocs de conversion identiques permet notamment d'assurer un fonctionnement en mode dégradé si un bloc est défaillant et de réduire les coûts de fabrication en réalisant un convertisseur particulier en associant des convertisseurs élémentaires produits en série.

Par ailleurs, cette architecture présente, grâce à la commande, certains avantages en termes d'oscillations dans les courants dans les liaisons et dans les tensions aux bornes des condensateurs. Il est ainsi possible de décaler facilement les commandes des blocs de conversion 200, 201, 202 entre eux (N blocs commandés à une période T avec des ordres décalés de T/N). Il est également possible de coupler les inductances (sur un même circuit magnétique) des blocs de conversion, permettant de limiter le nombre de circuits magnétiques employés.

Dans la suite de la description et sur les dessins annexés, un transistor doit être compris comme pouvant représenter un ou plusieurs transistors agencés en série et/ou en parallèle pour assurer le fonctionnement du dispositif. Il en est de même pour chaque diode qui pourra être un groupe de plusieurs diodes connectées en série et/ou parallèle, ou chaque condensateur qui pourra être un groupe de plusieurs condensateurs connectés en série et/ou parallèle.

Dans un réseau bipolaire ou dans un réseau monopolaire symétrique, la structure du dispositif proposé est à installer sur les deux pôles.

Dans l'architecture la plus générale du dispositif, représentée sur la figure 5, les moyens de commutation comportent six commutateurs :

- Un premier ensemble de deux commutateurs $S_1$, $S_2$ connecté entre la première borne B1 et la troisième borne B3 du dispositif 20 (en parallèle de la première source de tension, c'est-à-dire du premier condensateur Ci), les deux commutateurs $S_1$, $S_2$ définissant entre eux un premier point milieu de connexion ;

- Un deuxième ensemble de deux commutateurs $S_5$, $S_6$ connecté entre la deuxième borne B2 et la troisième borne B3 (en parallèle de la deuxième source de tension, c'est-à-dire du deuxième condensateur C2), les deux commutateurs $S_5$, $S_6$ définissant entre eux un deuxième point milieu de connexion ;

- Un commutateur $S_3$ connecté entre la deuxième borne B2 du dispositif 20 et le premier point milieu du premier ensemble de commutateurs ;

- Un commutateur $S_4$ connecté entre la première borne B1 du dispositif 20 et le deuxième point milieu du deuxième ensemble de commutateurs ;

Dans cette architecture générale, l'inductance L est connectée entre le premier point milieu et le deuxième point milieu.

Chaque commutateur des moyens de commutation pourra ensuite être choisi en fonction du signe des valeurs suivantes :

- Le courant $I_1$ ;

- Le courant $I_2$ ;

- Le ratio $I_1/I_2$ ;

- La différence $I_1 - I_2$ ;

- La différence $V_x = V_1 - V_2$ ;

- Le ratio $\dfrac{V_1 - V_2}{I_1 + I_2}$ ;

Les signes de ces valeurs définissent ce qu'on appelle par la suite un « cas de fonctionnement ». En outre, certains commutateurs définis dans l'architecture générale pourront être supprimés (circuit ouvert) en fonction du nombre de cas de fonctionnement désirés.

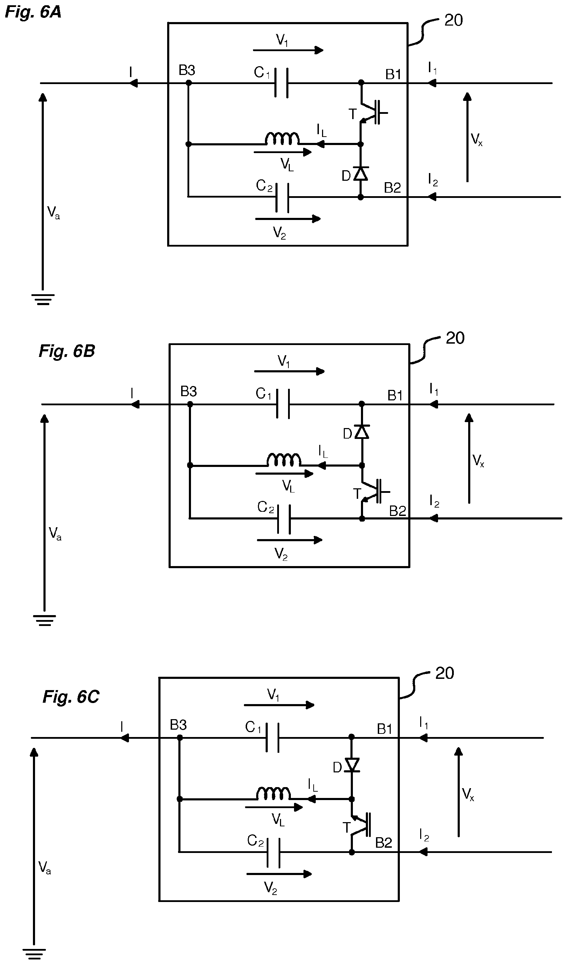

En référence aux figures 6A à 6I, plusieurs architectures sont ainsi proposées pour répondre à différents cas de fonctionnement. Bien entendu, il faut comprendre que la liste des cas exposés ci-dessous n'est pas exhaustive et que d'autres cas sont bien entendu envisageables. Certaines adaptations seront alors nécessaires pour parvenir à un dispositif optimal permettant notamment de tenir compte du nombre de cas de fonctionnement désirés. Dans les différents cas décrits ci-dessous, les références rapportées sur les dessins sont conservées d'une réalisation à l'autre dans la mesure où les composants restent identiques, au moins dans leur fonction.

Dans chaque cas de fonctionnement, les interrupteurs $S_1$ à $S_6$ sont choisis selon une réalisation particulière afin de répondre au besoin. De manière non exhaustive et non limitative, chaque commutateur sera alors choisi selon l'une des réalisations listées ci-dessous :

- Un circuit ouvert (c'est-à-dire aucune liaison électrique) ;

- Un court-circuit (c'est-à-dire une connexion permanente) ;

- Une diode ;

- Un interrupteur contrôlé non réversible (par exemple : IGBT ou BJT) ;

- Un interrupteur contrôlé réversible en courant (par exemple : IGBT avec diode en parallèle ou MOSFET) ;

- Un interrupteur contrôlé réversible en tension (Par exemple : IGBT et diode en série) ;

- Un interrupteur contrôlé réversible en courant et tension (Par exemple : deux IGBT avec diode en série) ;

- Un commutateur mécanique seul ;

- Un commutateur mécanique en série avec une diode ;

- Un commutateur mécanique en série avec un interrupteur contrôlé ;

- Eventuellement une combinaison de plusieurs de ces réalisations ;

Une première série de réalisations présentée ci-dessous est relative au fait que les courants $I_1$ et $I_2$ sont toujours de signes identiques.

**- Cas où $I_1>0$, $I_2 >0$ et $V_x>0$ - Figure 6A**

Dans cette réalisation, on a ainsi :

- $S_1$ = Circuit ouvert
- $S_2$ = IGBT
- $S_3$ = Diode
- $S_4$ = Circuit ouvert
- $S_5$ = Court-circuit
- $S_6$ = Circuit ouvert

Sur la figure 6A, le transistor T peut être de type bipolaire, à effet de champs (MOSFET), un GTO (éventuellement asymétrique, c'est à dire qui ne supporte pas de tension inverse) ou un IGCT (éventuellement asymétrique).

Le transistor T est commandé à la fermeture avec un rapport cyclique $\alpha$. Lorsque le transistor T est passant, on a $V_L=V_1$. Lorsque le transistor est ouvert, dans l'hypothèse selon laquelle le courant dans l'inductance ne s'annule jamais, la diode D est passante, on a $V_L=V_2$. En régime permanent, la tension moyenne aux bornes de l'inductance qui vaut $\alpha V_1+(1-\alpha)$ V2 doit être nulle. $V_1$ et $V_2$ sont donc de signes différents. Le courant moyen dans les condensateurs est nul en régime permanent, on a donc la moyenne de $I_L$ égale à I. Le courant moyen dans le transistor est égal à $I_1$ et à $\alpha I_L$ donc à $I_1=\alpha I$. De même, on a $I_2= (1-\alpha)$ I. Le rapport cyclique $\alpha$ permet donc de régler la répartition du courant I dans les liaisons 11 et 12, ce qui est l'effet escompté.

**- Cas où $I_1<0$, $I_2 <0$ et $V_x>0$ - Figure 6B**

Pour ce cas, les positions du transistor et de la diode sont échangées. Le principe de fonctionnement est le même que dans le cas précédent.

**- Cas où $I_1>0$, $I_2 >0$ et $V_x<0$ - Figure 6C**

Il s'agit d'une simple adaptation des cas précédents.

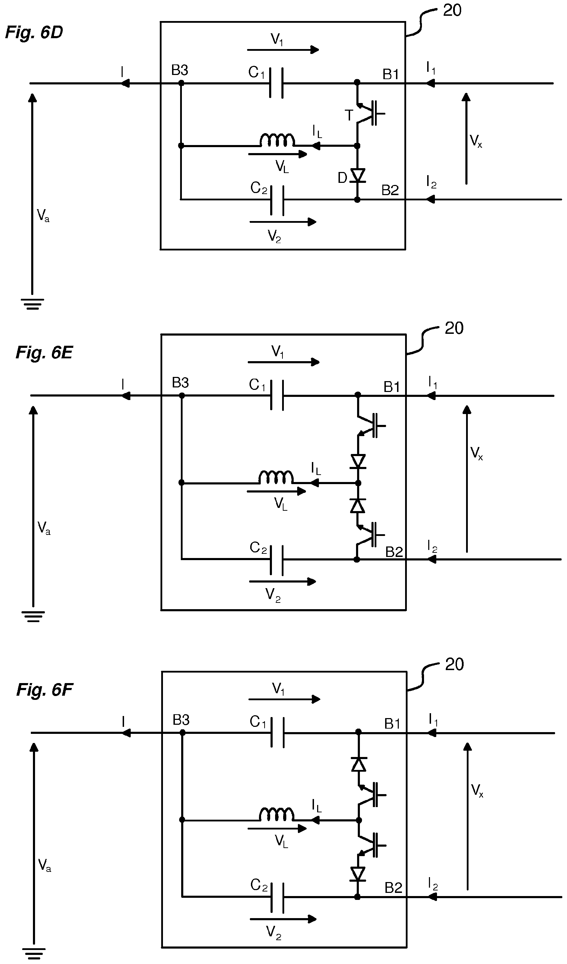

**- Cas où $I_1<0$, $I_2 <0$ et $V_x<0$ - Figure 6D**

Il s'agit d'une simple adaptation des cas précédents.

**- Cas où $I_1>0$, $I_2 >0$ et $V_x$ de signe quelconque (le signe de $V_x$ peut changer lors du fonctionnement) - Figure 6E**

- $S_1$ = Circuit ouvert
- $S_2$ = IGBT + Diode
- $S_3$ = IBGT + Diode
- $S_4$ = Circuit ouvert
- $S_5$ = Court-circuit
- $S_6$ = Circuit ouvert

Pour ce besoin, les interrupteurs doivent être réversibles en tension. Ainsi, on utilisera des transistors en série avec des diodes (comme représenté sur la figure 6E) ou des Thyristors GTO symétriques (qui supportent une tension inverse) ou IGCT symétriques.

**- Cas où $I_1 < 0$, $I_2 < 0$ et $V_x$ de signe quelconque (le signe de $V_x$ peut changer lors du fonctionnement) - Figure 6F**

Il s'agit d'une adaptation du cas de fonctionnement précédent.

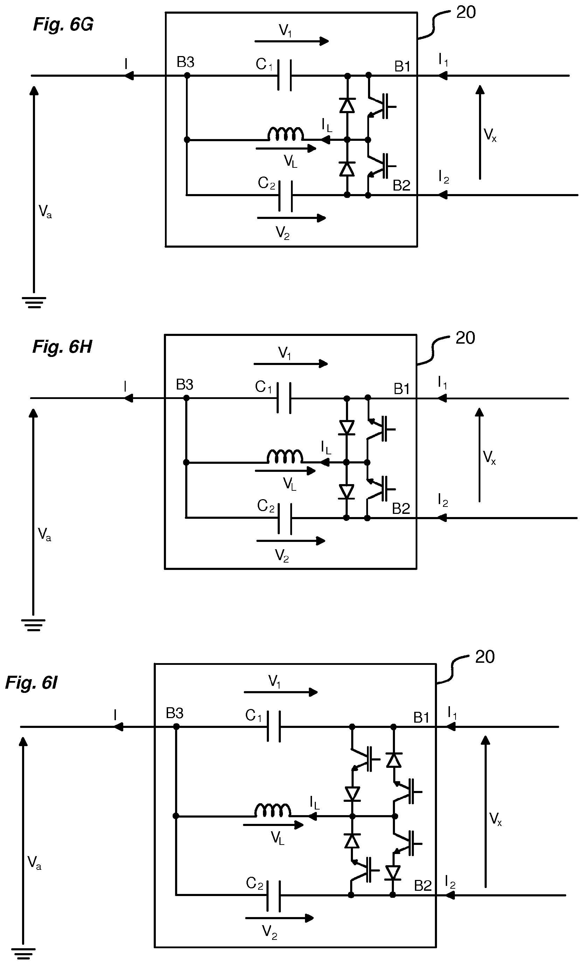

**- Cas où $V_x > 0$ et $I_1$ et $I_2$ de signes identiques mais pouvant changer ($I_1 > 0$ et $I_2 > 0$ ou $I_1 < 0$ et $I_2 < 0$) - Figure 6G**

Dans ce cas, les interrupteurs sont réversibles en courant mais non en tension. On utilisera des transistors à effet de champ éventuellement en parallèle avec des diodes ou des transistors de type IGBT en parallèle avec des diodes ou de type GTO (éventuellement asymétriques) en parallèle avec des diodes ou de type IGCT (éventuellement asymétriques) en parallèle avec des diodes.

**- Cas où $V_x < 0$ et $I_1$ et $I_2$ de signes identiques mais pouvant changer ($I_1 > 0$ et $I_2 > 0$ ou $I_1 < 0$ et $I_2 < 0$) - Figure 6H**

Il s'agit d'une adaptation du cas de fonctionnement précédent.

**- Cas où Vx de signe quelconque et I1 et I2 de signes identiques mais pouvant changer (I1>0 et I2>0 ou I1<0 et I2<0) - Figure 6I**

Pour ce besoin, on utilisera des interrupteurs réversibles en tension et en courant (mise en série et parallèle de transistors et diodes ou mise en antiparallèle de GTO, IGCT ou mise en antisérie de MOSFETs).

Une deuxième série de réalisations présentée ci-dessous est relative au fait que les courants I1 et I2 sont toujours de signes différents.

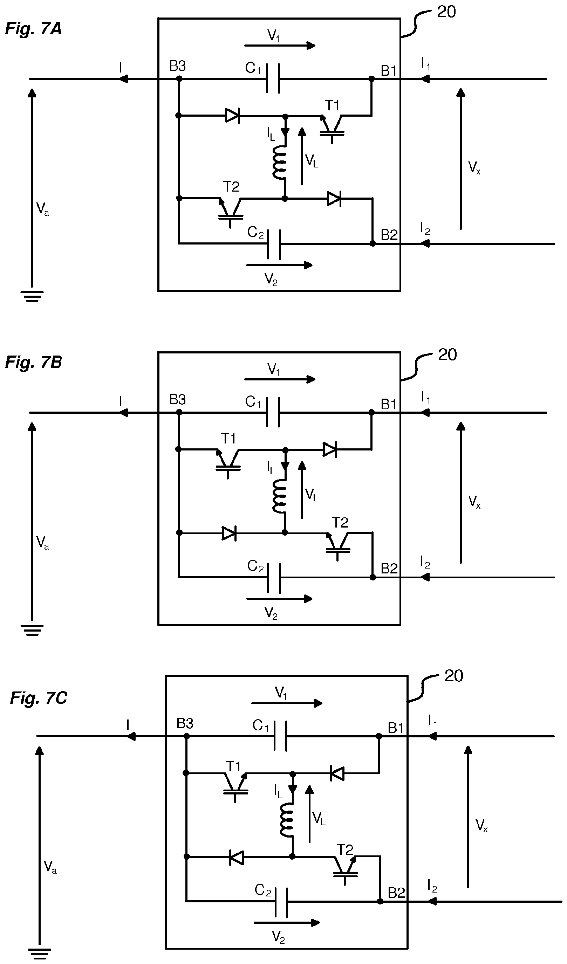

**- Cas où $I_1 > 0$, $I_2 < 0$ avec I et $V_x$ de signes quelconques mais différents ($I/V_x < 0$) - Figure 7A**

Dans ce cas de fonctionnement, on a alors la configuration suivante :

- $S_1$ = Diode
- $S_2$ = IGBT
- $S_3$ = Circuit ouvert
- $S_4$ = Circuit ouvert
- $S_5$ = IGBT
- $S_6$ = Diode

Pour cette réalisation, un mode de commande possible est le suivant. Les transistors $T_1$ et $T_2$ sont commandés à la fermeture simultanément avec un rapport cyclique $\alpha$. Lorsque les transistors sont fermés, la tension $V_L$ est alors égale à $V_1$. En supposant la conduction continue (IL ne s'annule jamais), lorsque les transistors sont commandés à l'ouverture, les diodes deviennent passantes, la tension $V_L$ vaut alors $-V_2$. La tension moyenne aux bornes de l'inductance vaut $\alpha V_1 - (1-\alpha)V_2$.

En régime permanent, cette tension est nulle en moyenne. On a donc :

$$V_1 = (1-\alpha)/\alpha V_2.$$

Les tensions $V_1$ et $V_2$ sont donc de même signe (forcément positif avec les interrupteurs choisis ici) et la tension insérée dans la maille du réseau est :

$$V_x = V_1 - V_2 = (1-2\alpha)/(1-\alpha)V_1 = (1-2\alpha)/\alpha V_2$$

Cette tension change donc de signe selon que $\alpha$ soit plus grand que 0.5 ou non.

En régime permanent, le courant moyen dans les condensateurs est nul. Le courant moyen dans le transistor $T_1$ (qui est passant une fraction $\alpha$ de la période) vaut donc $I_1$ (en fait $I_1/\alpha$ lorsqu'il conduit et 0 le reste du temps). Lorsque le transistor $T_1$ conduit, le courant qui le traverse est égal à $I_L$. On a donc égalité entre $I_1/\alpha$ et $I_L$. De même, on a égalité entre $-I_2/(1-\alpha)$ et $I_L$. On a donc :

$$I_1 = -\alpha I_2/(1-\alpha)$$

Ce dernier résultat montre bien que les courants $I_1$ et $I_2$ doivent donc être de signes opposés.

Comme on a $I = I_1 + I_2$, on obtient :

$$I_1 = -(1-2\alpha)/\alpha I \text{ et } I_2 = (1-2\alpha)/(1-\alpha) I$$

On constate donc bien que le réglage du rapport cyclique $\alpha$ permet de régler la répartition du courant I entre les liaisons 11 et 12, ce qui est l'effet escompté.

On constate aussi que le courant I (courant dans la station de conversion A) peut changer de signe même si le sens du courant dans les liaisons 11, 12 ne change pas. La réalisation présentée ici fonctionne pour $V_1$, $V_2$, $I_1$ positifs et $I_2$ négatif, la valeur de $\alpha$ permettant de répartir le courant de la station de conversion entre les liaisons 11 et 12. Le courant I dans la station de conversion A et la tension insérée dans la maille $V_x$ peuvent changer de signe mais on doit toujours avoir $I/V_x < 1$ (grandeurs de signes quelconques mais différents) car on a $V_x = (1-2\alpha)/\alpha V_2$ et $I = -\alpha/(1-2\alpha) I_1$ et les interrupteurs ont été choisis pour $V2 > 0$ et $I_1 > 0$. On a donc :

- soit $V_x > 0$ et $I < 0$ et alors $\alpha < 0,5$ ;

- soit $V_x < 0$ et $I > 0$ et alors $\alpha > 0,5$.

**- Cas où $I_1 < 0$, $I_2 > 0$ avec $I$ et $V_x$ de signes quelconques mais différents ($I/V_x < 0$) - Figure 7B**

Le principe de fonctionnement est le même que dans le cas précédent. Il s'agit juste de permuter les indices 1 et 2 des différents paramètres.

**- Cas où $I_1 > 0$, $I_2 < 0$ avec $I$ et $V_x$ de signes quelconques mais identiques ($I/V_x > 0$) - Figure 7C**

Le principe de fonctionnement est le même que dans les deux cas précédents, à l'exception que $V_1$ et $V_2$ sont négatifs.

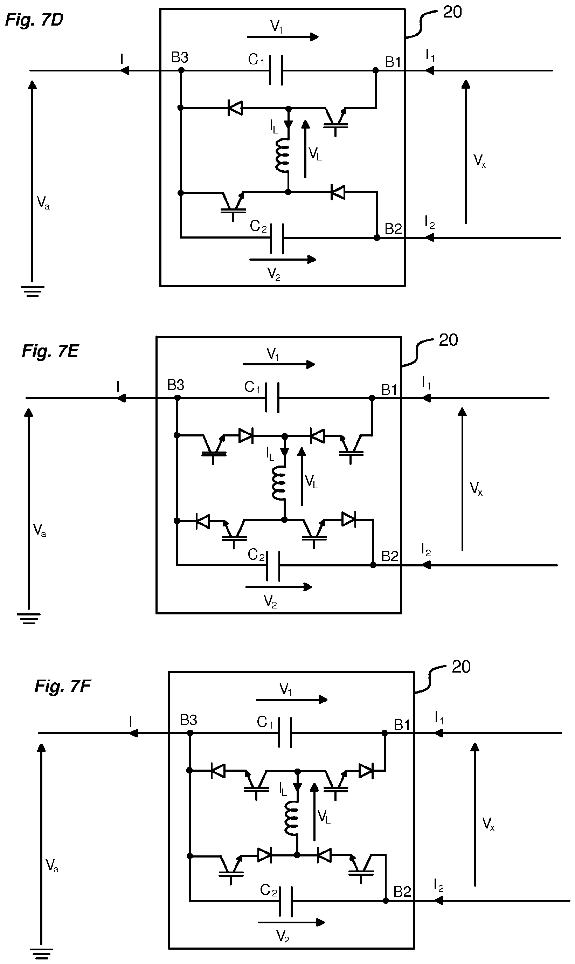

**- Cas où $I_1 < 0$, $I_2 > 0$ avec $I$ et $V_x$ de signes quelconques mais identiques ($I/V_x > 0$) - Figure 7D**

Il s'agit d'une adaptation de la réalisation précédente.

**- Cas où $I_1 > 0$, $I_2 < 0$ et $I$ et $V_x$ de signes quelconques (le ratio $I/V_x$ peut changer de signe) - Figure 7E**

Le principe de fonctionnement est le même mais $V1$ et $V2$ changent de signe selon la tension $Vx$ insérée. Les interrupteurs sont donc choisis réversibles en tension.

**- Cas où $I_1 < 0$, $I_2 > 0$ et $I$ et $V_x$ de signes quelconques - Figure 7F**

Il s'agit d'une adaptation de la réalisation précédente.

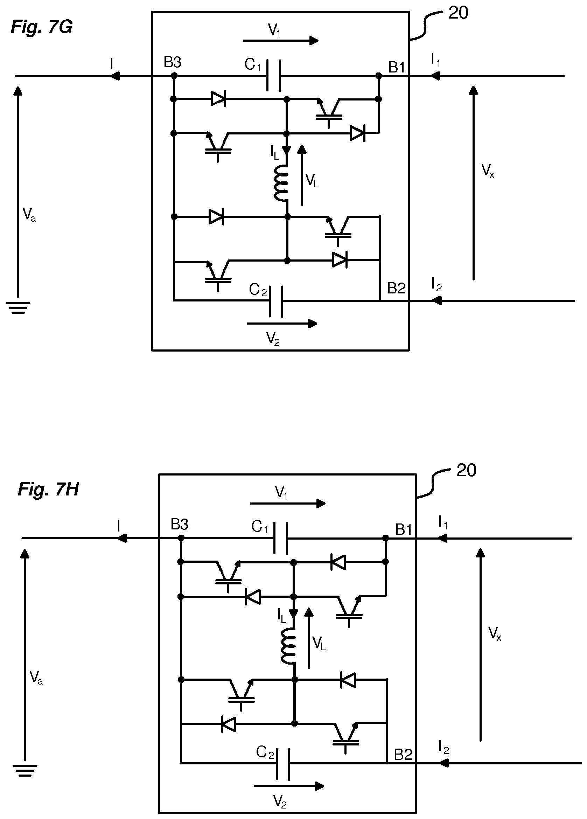

**- Cas où $I/V_x > 0$ et $I_1$ et $I_2$ de signes qui peuvent changer mais avec toujours $I_1$ et $I_2$ de signes opposés ($I_1/I_2 < 0$) - Figure 7G**

Dans cette réalisation, chaque commutateur est remplacé par l'association d'un transistor et d'une diode en parallèle. Les commutateurs sont agencés pour assurer le fonctionnement adapté au besoin.

**- Cas où $I/V_x < 0$ et $I_1$ et $I_2$ de signes qui peuvent changer mais avec toujours $I_1$ et $I_2$ de signes opposés (I1/I2 < 0) - Figure 7H**

Il s'agit d'une adaptation de la réalisation précédente.

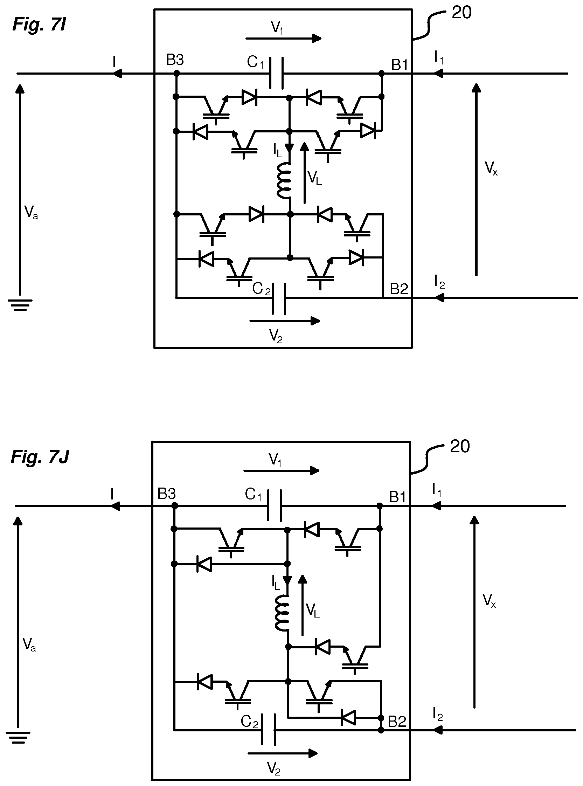

**- Cas où $V_x$ et $I$ quelconques et $I_1$ et $I_2$ de signes qui peuvent changer mais avec toujours $I_1$ et $I_2$ de signes différents (I1/I2 < 0) - Figure 7I**

Dans cette réalisation, chaque commutateur est remplacé par l'association de deux transistors et de deux diodes de manière à réaliser un commutateur réversible en courant et en tension. Les commutateurs sont agencés pour assurer le fonctionnement adapté au besoin.

**- Cas où $I_1 > 0$, $I_2$ de signe quelconque, $V_x > 0$ et $I > 0$ - Figure 7J**

Pour ce besoin, on a alors la configuration suivante :

- $S_1$ = IGBT et diode en parallèle
- $S_2$ = IGBT et Diode en série
- $S_3$ = Circuit ouvert
- $S_4$ = IGBT et Diode en série
- $S_5$ = IGBT et Diode en série
- $S_6$ = IGBT et diode en parallèle

On représente ici le convertisseur selon le principe précédent adapté au cas où $I_1$, $V_x$ et $I$ sont positifs et $I_2$ de signe pouvant changer. Ici l'interrupteur $S_3$ n'est pas utilisé.

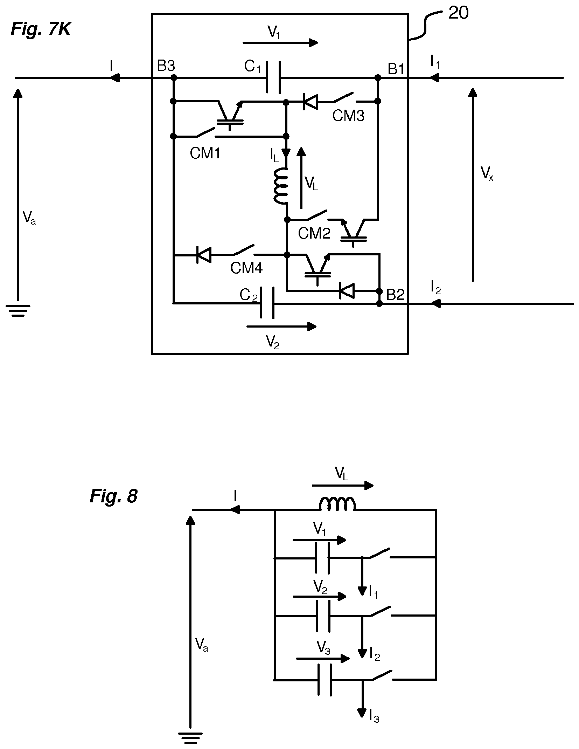

Par ailleurs, dans certaines réalisations, il sera également possible de remplacer des transistors par un simple contact mécanique, notamment lorsque l'un des courants $I_1$ ou $I_2$ change de signe. La figure 7K représente ainsi la variante de réalisation de l'architecture de la figure 7J, dans laquelle certains transistors et diodes ont été remplacés par un contact mécanique. Cette solution permet de réduire les pertes à l'état passant et le nombre de composants semi-conducteurs.

Lorsque les contacts mécaniques CM1 et CM2 sont fermés, les contacts CM3 et CM4 sont ouverts et réciproquement. Dans le premier cas, le fonctionnement est identique à celui de la réalisation de la figure 6A. Dans le deuxième cas, le fonctionnement est identique à celui de la réalisation de la figure 7C.

Bien entendu, comme évoqué précédemment, il faut comprendre qu'il existe encore d'autres réalisations, non décrites dans la présente demande mais qui résultent comme ceux déjà décrits ci-dessus, d'une adaptation de l'architecture générale du dispositif représentée sur la figure 5.

En référence à la figure 8, il faut également comprendre que la structure du dispositif pourra être étendue à un réseau maillé dans lequel plus de deux liaisons sont connectées à la station de conversion A. Sur la figure 8, trois liaisons sont ainsi reliées à la station de conversion A, sur lesquelles circulent respectivement les courants I1, I2 et I3. Sur cette figure, les commutateurs sont représentés de manière générique et pourront donc prendre une architecture adaptée au cas de fonctionnement tenant compte des signes possibles des différents courants et différentes tensions impliqués.

Selon un autre aspect de l'invention, il est également possible de prévoir un système dit de "bypass" (c'est-à-dire contournement) du dispositif de contrôle de flux de puissance de l'invention, afin de le contourner lorsqu'il n'est pas utile. Le système de "bypass" permet d'éviter la mise hors-tension complète du réseau.

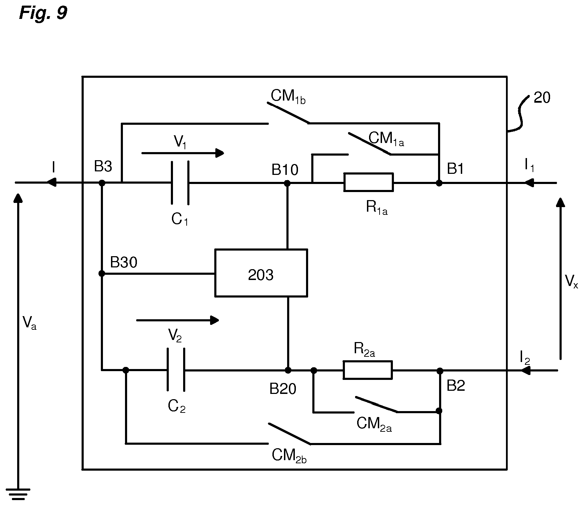

Ce système est visible sur la figure 9. Ce système fait avantageusement partie du dispositif de contrôle de flux de puissance. Les moyens de commande 21 du dispositif sont configurés pour assurer la commande de ce système de contournement.

Sur la figure 9, les moyens de commutation et l'inductance sont représentés dans un même bloc de conversion 203 comprenant une borne B30 connectée à la borne B3, une borne B10 connectée au condensateur C1 et une borne B20 connectée au condensateur C2.

Le système de "bypass" comporte une première résistance R1a permettant de décharger le condensateur C1 et une deuxième résistance $R_{2a}$ permettant de décharger le deuxième condensateur C2. La première résistance $R_{1a}$ est connectée d'une part à la première borne B1 et à la borne B10. La deuxième résistance $R_{2a}$ est connectée d'une part à la deuxième borne B2 et à la borne B20. Un premier interrupteur $CM_{1a}$ est connecté en parallèle de la première résistance $R_{1a}$ et un deuxième interrupteur $CM_{2a}$ est connecté en parallèle de la deuxième résistance $R_{2a}$. Un interrupteur $CM_{1b}$ est connecté entre la première borne B1 et la troisième borne B3. Un interrupteur $CM_{2b}$ est connecté entre la deuxième borne B2 et la troisième borne B3.

Les interrupteurs $CM_{1a}$, $CM_{1b}$, $CM_{2a}$ et $CM_{1b}$ peuvent être réalisés par des contacts mécaniques de contacteurs. Le dispositif qui actionne ces interrupteurs n'est pas représenté ici.

Quand le dispositif de contrôle de flux de puissance n'est pas employé (état 1) :

- les interrupteurs $CM_{1b}$ et $CM_{2b}$ sont fermés ;
- les interrupteurs $CM_{1a}$ et $CM_{2a}$ peuvent être dans n'importe quel état en régime permanent.

Quand le dispositif de contrôle de flux de puissance est employé (état 2) :

- les interrupteurs $CM_{1a}$ et $CM_{2a}$ sont fermés (afin que les courants du réseau ne traversent pas les résistances de décharge ce qui créerait des pertes) ;
- les interrupteurs $CM_{1b}$ et $CM_{2b}$ sont ouverts.

Pour passer de l'état 1 à l'état 2, les interrupteurs $CM_{1a}$ et $CM_{2a}$ sont fermés puis les interrupteurs $CM_{1b}$ et $CM_{2b}$ sont ouverts.

Pour passer de l'état 2 à l'état 1, les interrupteurs $CM_{1a}$ et $CM_{2a}$ sont ouverts puis les interrupteurs $CM_{1b}$ et $CM_{1b}$ sont fermés.

De ce fait, le dispositif de contrôle de flux de puissance est court-circuité et les condensateurs sont déchargés dans les résistances. Après la décharge des condensateurs, les interrupteurs $CM_{1a}$ et $CM_{2a}$ peuvent être fermés pour préparer la mise sous tension suivante. La solution proposée permet donc de ne jamais interrompre le courant dans les liaisons. La séquence pour passer d'un état à l'autre est réalisée de manière à ne pas court-circuiter les condensateurs.

En variante de réalisation, le contrôle appliqué aux moyens de commutation du dispositif de contrôle de flux de puissance peut annuler la tension aux bornes des condensateurs (en agissant sur les rapports cycliques). Si cette fonctionnalité de contrôle est mise en oeuvre, les résistances et les interrupteurs $CM_{1a}$ et $CM_{2a}$ peuvent être omis et seuls les interrupteurs $CM_{1b}$ et $CM_{2b}$ sont conservés.

On comprend de ce qui précède que la solution de l'invention présente un certain nombre d'avantages. Elle permet d'augmenter la capacité de transport des réseaux maillés à courant continu, en évitant les congestions de liaisons sans investir dans l'installation de nouvelles liaisons.

De plus, la solution de l'invention peut être utilisée pour réaliser les fonctions suivantes :

- Elle peut aussi être utilisée pour répartir les courants dans les réseaux de manière à minimiser les pertes dans le réseau.
- Comme l'invention permet de contrôler le courant dans des liaisons, elle peut être utilisée pour annuler le courant dans une liaison. Ceci est utile pour ouvrir un contacteur pour une opération de reconfiguration du réseau.
- Dans le cas d'un réseau mixte (bipolaire / monopolaire (« tap converters » insérés dans un réseau bipolaire) par exemple), l'invention peut être utilisée pour équilibrer les courants dans les liaisons.

Il faut également noter qu'aucune partie du dispositif n'est soumise à la tension qui existe entre les conducteurs des liaisons et la terre (comme c'est le cas dans des solutions antérieures). Les tensions qui doivent apparaitre aux bornes du dispositif sont de l'ordre de grandeur des chutes de tension qui existent dans la maille du réseau considéré ($R_1I_1-R_2I_2+R_3I_3$ pour l'exemple considéré), c'est-à-dire des tensions beaucoup plus faibles que celles qui existent entre les conducteurs des liaisons et la terre ($V_a$ par exemple). Par ailleurs, le dispositif n'échange pas d'énergie avec le réseau alternatif et il n'y a donc aucun problème d'isolation avec ce dernier. Il s'agit donc d'un convertisseur qui est placé à un potentiel élevé par rapport à la terre mais qui ne voit pas de très fortes tensions à ses bornes.

## Revendications

**1.** Dispositif de contrôle de flux de puissance destiné à être employé dans un réseau maillé à courant continu, une maille comportant au moins trois nœuds, chacun à une tension déterminée et trois liaisons, dites première liaison (11) reliant le premier nœud au deuxième nœud, deuxième liaison (12) reliant le premier nœud au troisième nœud et troisième liaison (13) reliant le deuxième nœud au troisième nœud, ledit dispositif étant **caractérisé en ce qu'**il comporte :

- Une première borne (B1) destinée à être connectée en série sur la première liaison (11), une deuxième borne (B2) destinée à être connectée en série sur la deuxième liaison (12) et une troisième borne (B3) destinée à être connectée au premier nœud,
- Une première source de tension connectée entre sa première borne (B1) et sa troisième borne (B3) comprenant au moins un premier condensateur ($C_1$),
- Une deuxième source de tension connectée entre sa deuxième borne (B2) et sa troisième borne (B3) comprenant au moins un deuxième condensateur ($C_2$),
- Une source de courant connectée alternativement à la première source de tension et à la deuxième source de tension et configurée pour assurer un transfert d'énergie entre la première source de tension et la deuxième source de tension, ladite source de courant comportant au moins une inductance (L),
- Des moyens de commutation agencés pour permettre une connexion de ladite source de courant en alternance, en parallèle de la première source de tension ou en parallèle de la deuxième source de tension, lesdits moyens de commutation comprenant :

◦ Un premier ensemble de deux premiers commutateurs ($S_1$, $S_2$) connecté entre la première borne (B1) et la troisième borne (B3) du dispositif, en parallèle de la première source de tension, les deux commutateurs ($S_1$, $S_2$) du premier ensemble définissant entre eux un premier point milieu de connexion ;
◦ Un deuxième ensemble de deux deuxièmes commutateurs ($S_5$, $S_6$) connecté entre la deuxième borne (B2) et la troisième borne (B3), en parallèle de la deuxième source de tension, les deux commutateurs ($S_5$, $S_6$) du deuxième ensemble définissant entre eux un deuxième point milieu de connexion ;
◦ Un troisième commutateur ($S_3$) connecté entre la deuxième borne (B2) et le premier point milieu du premier ensemble de commutateurs ;
◦ Un quatrième commutateur ($S_4$) connecté entre la première borne (B1) et le deuxième point milieu du deuxième ensemble de commutateurs ;

- Ladite source de courant étant connectée entre le premier point milieu de connexion et le deuxième point milieu de connexion,
- Des moyens de commande (21) configurés pour commander lesdits moyens de commutation de manière à réaliser ladite connexion de ladite source de courant en alternance, en parallèle de la première source de tension ou en parallèle de la deuxième source de tension et commander un transfert d'énergie entre la première source de tension et la deuxième source de tension via ladite source de courant.

2. Dispositif selon la revendication 1, **caractérisé en ce que** l'inductance (L) est connectée entre le premier point milieu et le deuxième point milieu.

3. Dispositif selon la revendication 1 ou 2, **caractérisé en ce que** chaque commutateur est choisi en fonction du signe des paramètres suivants :

- Le courant $I_1$ ;
- Le courant $I_2$ ;
- Le ratio $I_1/I_2$ ;
- La différence $I_1-I_2$ ;
- La différence $Vx=V_1-V_2$ ;
- Le ratio $\frac{V_1-V_2}{I_1+I_2}$ ;

Dans lesquelles :

- $I_1$ correspond au courant qui circule dans la première liaison ;
- $I_2$ correspond au courant qui circule dans la deuxième liaison ;
- V1 correspond à la tension aux bornes de la première source de tension ;
- V2 correspond à la tension aux bornes de la deuxième source de tension.

4. Dispositif selon la revendication 3, **caractérisé en ce que** chaque commutateur est choisi parmi :

- Un circuit ouvert ;
- Un court-circuit ;
- Une diode ;
- Un interrupteur contrôlé non réversible ;
- Un interrupteur contrôlé réversible en courant ;
- Un interrupteur contrôlé réversible en tension ;
- Un interrupteur contrôlé réversible en courant et en tension ;
- Un commutateur mécanique seul ;
- Un commutateur mécanique en série avec une diode ;
- Un commutateur mécanique en série avec un interrupteur contrôlé ;

5. Dispositif selon l'une des revendications 1 à 4, **caractérisé en ce que** lesdits moyens de commutation et ladite source de courant sont répartis dans plusieurs blocs de conversion (200, 201, 202) identiques, et **en ce qu'**il comporte un premier bloc de conversion connecté de manière distincte à la première borne (B1), à la deuxième borne (B2) et à la troisième borne (B3).

6. Dispositif selon l'une des revendications 1 à 5, **caractérisé en ce qu'**il comporte un système de contournement dudit dispositif, commandé par lesdits moyens de commande (21) et comprenant des moyens de commutation agencés en parallèle de chaque source de tension.

7. Dispositif selon la revendication 6, **caractérisé en ce que** ledit système de contournement comporte des moyens commandés de décharge de chaque source de tension.

8. Utilisation du dispositif tel que défini dans l'une des revendications précédentes dans un réseau maillé à courant continu, ledit réseau comprenant au moins trois nœuds qui sont chacun à une tension déterminée et trois liaisons, dites première liaison reliant le premier nœud au deuxième nœud, deuxième liaison reliant le premier nœud au troisième nœud et troisième liaison reliant le deuxième nœud au troisième nœud.

**Patentansprüche**

1. Kontrollvorrichtung für Leistungsfluss, die zur Verwendung in einem Gleichstrom-Maschennetz bestimmt ist, wobei eine Masche mindestens drei Knoten mit jeweils einer bestimmten Spannung und drei Verbindungen aufweist, wobei eine erste Verbindung (11) den ersten Knoten mit dem zweiten Knoten verbindet, eine zweite Verbindung (12) den ersten Knoten mit dem dritten Knoten verbindet und eine dritte Verbindung (13) den zweiten Knoten mit dem dritten Knoten verbindet, wobei die Vorrichtung **dadurch gekennzeichnet ist, dass** sie aufweist:

- eine erste Klemme (B1), die dazu bestimmt ist, in Reihe an die erste Verbindung (11) angeschlossen zu werden, eine zweite Klemme (B2), die dazu bestimmt ist, in Reihe an die zweite Verbindung (12) angeschlossen zu werden und eine dritte Klemme (B3), die dazu bestimmt ist, an den ersten Knoten angeschlossen zu werden,
- eine erste Spannungsquelle, die zwischen ihrer ersten Klemme (B1) und ihrer dritten Klemme (B3) angeschlossen ist und mindestens einen ersten Kondensator ($C_1$) umfasst,
- eine zweite Spannungsquelle, die zwischen ihrer zweiten Klemme (B2) und ihrer dritten Klemme (B3) angeschlossen ist und mindestens einen zweiten Kondensator ($C_2$) umfasst,
- eine Stromquelle, die abwechselnd an der ersten Spannungsquelle und an der zweiten Spannungsquelle angeschlossen und konfiguriert ist, um einen Energietransfer zwischen der ersten Spannungsquelle und der zweiten Spannungsquelle sicherzustellen, wobei die Stromquelle mindestens eine Induktivität (L) aufweist,
- Umschaltmittel, die angeordnet sind, um einen Anschluss der Stromquelle abwechselnd parallel mit der ersten Spannungsquelle oder parallel mit der zweiten Spannungsquelle zu ermöglichen, wobei die Umschaltmittel umfassen:

o einen ersten Satz von zwei ersten Schaltern ($S_1$, $S_2$), die zwischen der ersten Klemme (B1) und der dritten Klemme (B3) der Vorrichtung parallel zu der ersten Spannungsquelle angeschlossen sind, wobei die beiden Schalter ($S_1$, $S_2$) des ersten Satzes zwischen sich einen ersten Anschlussmittelpunkt definieren;
o einen zweiten Satz von zwei zweiten Schaltern ($S_5$, $S_6$), die zwischen der zweiten Klemme (B2) und der dritten Klemme (B3) parallel zu der zweiten Spannungsquelle angeschlossen sind, wobei die beiden Schalter ($S_5$, $S_6$) des zweiten Satzes zwischen sich einen zweiten Anschlussmittelpunkt definieren;
o einen dritten Schalter ($S_3$), der zwischen der zweiten Klemme (B2) und dem ersten Mittelpunkt des ersten Schaltersatzes angeschlossen ist;
o einen vierten Schalter (S4), der zwischen der ersten Klemme (B1) und dem zweiten Mittelpunkt des zweiten Schaltersatzes angeschlossen ist;

- wobei die Stromquelle zwischen dem ersten Anschlussmittelpunkt und dem zweiten Anschlussmittelpunkt angeschlossen ist,
- Steuerungsmittel (21), die konfiguriert sind, um die Umschaltmittel so zu steuern, dass sie den Anschluss der Stromquelle abwechselnd parallel zur ersten Spannungsquelle oder parallel zur zweiten Spannungsquelle herstellen und eine Energieübertragung zwischen der ersten Spannungsquelle und der zweiten Spannungsquelle über die Stromquelle steuern.

2. Vorrichtung nach Anspruch 1, **dadurch gekennzeichnet, dass** die Induktivität (L) zwischen dem ersten Mittelpunkt und dem zweiten Mittelpunkt angeschlossen ist.

3. Vorrichtung nach Anspruch 1 oder 2, **dadurch ge-**

**kennzeichnet, dass** jeder Schalter nach dem Vorzeichen der folgenden Parameter ausgewählt wird:

- der Strom $I_1$;
- der Strom $I_2$;
- das Verhältnis $I_1/I_2$;
- die Differenz $I_1$-$I_2$;
- die Differenz $V_x = V_1$-$V_2$;
- das Verhältnis $\dfrac{V_1 - V_2}{I_1 + I_2}$;

in denen:

- $I_1$ dem Strom entspricht, der in der ersten Verbindung fließt;
- $I_2$ dem Strom entspricht, der in der zweiten Verbindung fließt;
- V1 der Spannung an den Klemmen der ersten Spannungsquelle entspricht;
- V2 der Spannung an den Klemmen der zweiten Spannungsquelle entspricht.

4. Vorrichtung nach Anspruch 3, **dadurch gekennzeichnet, dass** jeder Schalter ausgewählt ist unter:

- ein offener Stromkreis;
- ein geschlossener Stromkreis;
- eine Diode;
- ein nicht umkehrbar gesteuerter Unterbrecher;
- ein im Strom umkehrbar gesteuerter Unterbrecher;
- ein in der Spannung umkehrbar gesteuerter Unterbrecher;
- ein im Strom und in der Spannung umkehrbar gesteuerter Unterbrecher;
- ein einzelner mechanischer Schalter;
- ein mechanischer Schalter in Reihe mit einer Diode;
- ein mechanischer Schalter in Reihe mit einem gesteuerten Unterbrecher.

5. Vorrichtung nach einem der Ansprüche 1 bis 4, **dadurch gekennzeichnet, dass** die Umschaltmittel und die Stromquelle in mehreren identischen Umwandlungsblöcken (200, 201, 202) verteilt sind, und dass sie einen ersten Umwandlungsblock aufweist, der auf unterschiedliche Weise an der ersten Klemme (B1), an der zweiten Klemme (B2) und an der dritten Klemme (B3) angeschlossen ist.

6. Vorrichtung nach einem der Ansprüche 1 bis 5, **dadurch gekennzeichnet, dass** sie ein System zur Umgehung der Vorrichtung aufweist, das von den Steuerungsmitteln (21) gesteuert wird und Umschaltmittel umfasst, die parallel zu jeder Spannungsquelle angeordnet sind.

7. Vorrichtung nach Anspruch 6, **dadurch gekennzeichnet, dass** das System zur Umgehung gesteuerte Mittel zum Entladen jeder Spannungsquelle aufweist.

8. Verwendung der Vorrichtung nach einem der vorhergehenden Ansprüche in einem Gleichstrom-Maschennetz, wobei das Netz mindestens drei Knoten, die sich jeweils auf einer bestimmten Spannung befinden und drei Verbindungen umfasst, wobei die erste Verbindung den ersten Knoten mit dem zweiten Knoten verbindet, die zweite Verbindung den ersten Knoten mit dem dritten Knoten verbindet und die dritte Verbindung den zweiten Knoten mit dem dritten Knoten verbindet.

**Claims**

1. Device for controlling power flow intended to be used in a direct current mesh network, a mesh including at least three nodes, each at a determined voltage and three links, called first link (11) connecting the first node to the second node, second link (12) connecting the first node to the third node and third link (13) connecting the second node to the third node, said device being **characterised in that** it includes:

- A first terminal (B1) intended to be connected in series to the first link (11), a second terminal (B2) intended to be connected in series to the second link (12) and a third terminal (B3) intended to be connected to the first node,
- A first voltage source connected between its first terminal (B1) and its third terminal (B3) comprising at least one capacitor ($C_1$),
- A second voltage source connected between its second terminal (B2) and its third terminal (B3) comprising at least one second capacitor ($C_2$),
- A current source alternatively connected to the first voltage source and to the second voltage source and configured to ensure a transfer of energy between the first voltage source and the second voltage source, said current source including at least one inductance (L),
- Switching means disposed to allow a connection in alternance of said current source, in parallel to the first voltage source or in parallel to the second voltage source, said switching means comprising:

    ◦ A first set of two first changeover switches ($S_1$, $S_2$) connected between the first terminal (B1) and the third terminal (B3) of the device, in parallel to the first voltage source, the two changeover switches ($S_1$, $S_2$) of the first set defining between them a first central connection point;

◦ A second set of two second changeover switches ($S_5$, $S_6$) connected between the second terminal (B2) and the third terminal (B3), in parallel to the second voltage source, the two changeover switches ($S_5$, $S_6$) of the second set defining between them a second central connection point;

◦ A third changeover switch ($S_3$) connected between the second terminal (B2) and the first central point of the first set of changeover switches;

◦ A fourth changeover switch ($S_4$) connected between the first terminal (B1) and the second central point of the second set of changeover switches;

- Said source of current between connected between the first central connection point and the second central connection point,
- Control means (21) configured to control said changeover switching means so as to make said connection in alternance of said current source, in parallel to the first voltage source or in parallel to the second voltage source and to control a transfer of energy between the first voltage source and the second voltage source via said current source.

2. Device according to Claim 1, **characterised in that** the inductance (L) is connected between the first central point and the second central point.

3. Device according to Claim 1 or 2, **characterised in that** each switch is chosen according to the sign of the following parameters:

  - current $I_1$;
  - current $I_2$;
  - ratio $I_1/I_2$;
  - difference $I_1$-$I_2$;
  - difference Vx=$V_1$-$V_2$;
  - ratio $\dfrac{V_1 - V_2}{I_1 + I_2}$;

In which:

  - $I_1$ corresponds to the current that circulates in the first link;
  - $I_2$ corresponds to the current that circulates in the second link;
  - V1 corresponds to the voltage at the terminals of the first voltage source;
  - V2 corresponds to the voltage at the terminals of the second voltage source.

4. Device according to Claim 3, **characterised in that** each changeover switch is chosen among:

  - an open circuit;
  - a short-circuit;
  - a diode;
  - a non-reversible controlled changeover switch;
  - a controlled changeover switch reversible in current;
  - a controlled changeover switch reversible in voltage;
  - a controlled changeover switch reversible in current and in voltage;
  - a single mechanical changeover switch;
  - a mechanical changeover switch in series with a diode;
  - a mechanical changeover switch in series with a controlled power switch.

5. Device according to one of Claims 1 to 4, **characterised in that** said switching means and said current source are distributed in several identical conversion blocks (200, 201, 202) and **in that** it includes a first conversion block connected separately to the first terminal (B1), the second terminal (B2) and the third terminal (B3).

6. Device according to one of Claims 1 to 5, **characterised in that** it includes a system for bypassing said device, controlled by said control means (21) and comprising switching means disposed in parallel to each voltage source.

7. Device according to Claim 6, **characterised in that** said bypass system includes controlled means of discharging each voltage source.

8. Utilisation of the device as defined in one of the preceding claims in a direct current mesh network, said network comprising at least three nodes that are each at a determined voltage and three links, called first link connecting the first node to the second node, second link connecting the first node to the third node and third link connecting the second node to the third node.

*Fig. 1*

*Fig. 2*

*Fig. 3*

**Fig. 4A**

**Fig. 4B**

**Fig. 5**

**Fig. 6A**

**Fig. 6B**

**Fig. 6C**

*Fig. 6D*

*Fig. 6E*

*Fig. 6F*

*Fig. 6G*

*Fig. 6H*

*Fig. 6I*

Fig. 7A

Fig. 7B

Fig. 7C

Fig. 7D

Fig. 7E

Fig. 7F

Fig. 7G

Fig. 7H

*Fig. 7I*

20

*Fig. 7J*

20

*Fig. 7K*

*Fig. 8*

**Fig. 9**

**EP 3 656 030 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2012037957 A1
- WO 2010115452 A1
- WO 2013013858 A1
- EP 3007301 A1
- EP 3007300 A1
- WO 2013178807 A1